(19) Europäisches Patentamt
European Patent Office
Office européen des brevets

(11) **EP 3 896 035 A1**

(12) **EUROPEAN PATENT APPLICATION**

(43) Date of publication:
**20.10.2021 Bulletin 2021/42**

(21) Application number: **20169693.7**

(22) Date of filing: **15.04.2020**

(51) Int Cl.:
**C01B 33/158** (2006.01)      **B01J 13/00** (2006.01)
**C01B 33/159** (2006.01)      **C01B 33/16** (2006.01)
**F16L 59/02** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **EMPA Eidgenössische
Materialprüfungs- und
Forschungsanstalt
CH-8600 Dübendorf (CH)**

(72) Inventors:
• **Koebel, Matthias
  8306 Brüttisellen (CH)**
• **Stojanovic, Ana
  8037 Zürich (CH)**
• **Zhao, Shanyu
  8600 Dübendorf (CH)**
• **Olivier, Emery
  8002 Zürich (CH)**

(74) Representative: **Kasche & Partner
Bühlstrasse 1
8125 Zollikerberg/Zürich (CH)**

(54) **SILICA AEROGELS AND SILICA AEROGEL BLANKETS**

(57)      The present invention pertains to a water glass-based method for preparing a silica aerogel, a silica aerogel precursor material and a silica aerogel blanket.

Fig. 1

EP 3 896 035 A1

**Description**

The present invention pertains to a water glass-based method for preparing a silica aerogel, a silica aerogel precursor material and a silica aerogel blanket.

**Background**

Silica aerogels are low-density solids with high porosity in the mesopore (2-50 nm) size range which enables superior thermal insulation performance, typically in the super-insulating regime below 0.02 W/m K. Over the past decade, aerogel insulation has found niche applications in the oil and gas as well as industrial insulation sector. For larger volume commodity applications, their cost is still prohibitively high which is directly linked to the complex manufacturing process. By far the most widely sold aerogel insulation product is a blanket consisting of a micro-fractured, hydrophobic silica aerogel phase supported in and held together by a fibrous matrix.

The typical method of preparation for aerogel blankets uses a silica sol in an alcohol-based solvent system. The cast sol is activated to turn into a gel by means of a base releasing the hydrophobe hexamethyldisilazane (HMDZ) which serves two purposes simultaneously, namely to activate the gelation step and to initiate the hydrophobization process that renders the large inner pore surfaces inside the silica gel water repellent. In the typical state of the art blanket manufacturing process, the hydrophobic gels are then exchanged into and dried from supercritical carbon dioxide which directly yields the aerogel composite blankets. However, at large industrial scale supercritical drying is a rather resource and capital-intensive drying method which limits the commercialization of commodity type aerogel blankets.

An alternative precursor for silica aerogel preparation is aqueous water glass also known as sodium silicate. Unfortunately, gels produced by the water glass technique have the main drawback that the sodium ions present in the hydrogel must be removed from the gel, for example through ion exchange of the precursor even before gelation. The typical solvent-exchange process, e.g. described in US 2012/0225003, is however quite time consuming and not very economical.

US 2018/0105429 A1 discloses a process for producing organically modified aerogels, wherein a biphasic system comprising a water glass solution, an organic solvent and silylating agents is set to pH 9 for inducing gelation and organic modification.

Schwertfeger et al. (J. Non-Cryst. Solids, 1998, 225, 24-29) and US 5,647,962 describe a process for preparing $SiO_2$ gels. The method entails gelling silicic acid in an aqueous water glass solution followed by removing the water from the gel by extractive distillation with an organic solvent as an azeotrope. After removal of the water, the gel is modified by the addition of a silylating agent.

It is the objective of the present invention to provide an improved method for preparing a silica aerogel, a silica aerogel precursor material and a silica aerogel blanket.

In a first aspect, the present invention is directed to a method for preparing a silica aerogel or aerogel precursor material comprising the steps of

(a) providing an aqueous water glass solution;
(b) forming silicic acid by adding an acid to the solution of (a) until a pH-value of 3 or less, optionally about 3 to 1, optionally about 2.5 to 1 or 2 to 1 is reached;
(c) optionally covalently modifying the silicic acid during or after step (b), optionally by adding a monoorganofunctional silane, a diorganofunctional silane or a combination thereof;
(d) adding an organosilane-based hydrophobization agent and/or an organic solvent as an organic phase to the solution of (b) or (c);
(e) adding a base to the mixture of (d) to induce silica gelation, optionally until the mixture is neutralized, optionally until a pH-value of about 4 to 10, optionally about 4 to 8 is reached;
(f) transferring the silica gel from the aqueous to the organic phase to form a silica gel slurry in the organic phase, optionally by adding an acid and/or a phase transfer catalyst to induce hydrophobization of the silica gel;
(g) separating and collecting the organic phase comprising the silica gel slurry; and
(h) optionally drying the silica gel slurry to obtain a silica aerogel powder.

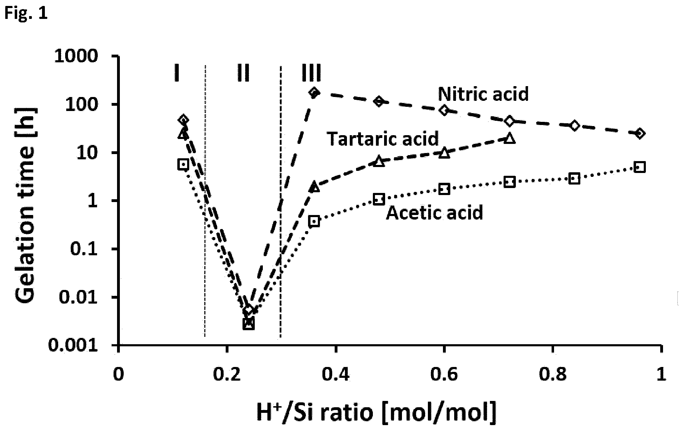

It was surprisingly found that gelation and with it the final product quality can be controlled very efficiently by acidifying the water glass solution to a pH of about 3 or less to create a silicic acid with sufficient shelf life for preparing, mixing and optionally pre-modifying the sol and subsequently raising the pH of the solution by adding a base. Another advantage of the present method is the gain of additional operational freedom for a production process and improved product homogeneity. Without wishing to be bound by theory, the increased control of the gelation kinetics is believed to originate from to the non-linear correlation between gelation time and pH, as depicted in representative and exemplary Fig. 1. At a pH of or lower than 3 (e.g. for a completely neutralized water glass solution), the sol is stable for, e.g., hours and gelation and aging are very slow. For example, back titrating the acidic silicic acid sol with a relatively small amount of base (small number of moles when compared to the total amount of acid previously used for neutralization) quickly raises the pH into the range of 4-9 where gelation is, e.g., orders of magnitude faster. For example, rapid and reliable gelation can be controlled more precisely by adding said small amount of base to the acidic water glass solution, rather than by acidifying the basic water glass solution, which leads to more inhomogeneous gel phases. For example, no significant gelation occurs in the present method until a base is added in step (e), and, for example, the viscosity of the solutions of steps (a) to (d) may stay essentially the same and, e.g., essentially the same as water.

The gelation time of a water glass solution (a sodium silicate-comprising solution) for use in the present invention, which is neutralized to a pH value of 3 or lower is in the order of, e.g. a few hours (for example for a water glass solution comprising 4.5 wt% silicon dioxide). The skilled person appreciates that the exact gelation time may depend on factors such as, e.g., temperature and the total ionic strength. If neutralization is stopped earlier, e.g. at a pH value of 4 or 5, gelation is quicker and generally occurs in less than an hour or even just a few minutes, respectively. It was surprisingly found that a pH value of at most 3 allows a reasonable acidity in combination with good stability and shelf life.

In an embodiment of the present invention a degree of overtitration from a reference point (RP) at $pH_{RP} = 3$ towards a more acidic pH is defined for determining the quantities of acid added in step (b) of the present method. The degree of overtitration ($D_{OT}$) is defined as follows:

$$D_{OT} = (n_{H+, final} - n_{H+, RP}) / n_{H+, RP} = (n_{H+, final} / n_{H+, RP}) - 1$$

wherein

- $n_{H+, final}$ is the number of moles of formal protons added to a water glass solution to reach the desired degree of titration or overtitration, i.e. a pH value $\leq 3$, optionally overtitration, i.e. a pH value < 3. The number of moles of formal protons is based on the number of acidic protons given in the molecular or structural formula of the acid used, adhering to the Brønsted-Lowry formalism to describe the neutralizing acid, and
- $n_{H+, RP}$ is the number of moles of formal protons required to neutralize an identical reference water glass solution to a reference pH value of $pH_{RP} = 3$.

The number of moles of formal protons to reach a reference pH value of 3 can either be calculated based on the (known) pKa-values of the water glass solution and the acid used in step (b) of the present method or it can be determined by a standard acid-base titration method.

The degree of overtitration can be adjusted to a range of $D_{OT}$ values from about 0.01 to about 3, optionally from about 0.01 to about 1, optionally from about 0.01 to about 0.3 or from about 0.01 to about 0.1, by addition of the acid in step (b) of the present method.

For example, the method for preparing a silica aerogel or aerogel precursor material described herein can be one wherein in step (b) silicic acid is formed by adding an acid to the solution of step (a) until a $D_{OT}$ of about 0.01 to about 3, optionally from about 0.01 to about 1, optionally from about 0.01 to about 0.3 or from about 0.01 to about 0.1 is reached.

The selection of the degree of overtitration for a given water glass solution, for example depending on the type of sodium silicate, the dilution and/or the type of neutralizing acid, can be adjusted by the skilled person, e.g. within the range(s) defined above, to fine-tune the shelf-life of the silicic acid sol obtained in step (a) of the present method, e.g. depending on the process requirements.

For example, a longer shelf life may be advantageous if an industrial process is to be stopped and the silicic acid already prepared inside a vessel or continuously does not gel within a few hours but leaves several days for maintenance or troubleshooting, without causing unwanted gelation. The latter is often accompanied by gelation inside a vessel within pipes, which requires a substantial cleanup effort and associated costs. Also, if a covalent modification is performed in step (c) of the present method, for example with an organofunctional alkoxysilane reagent, the hydrolysis of the reagent is better controllable and the resulting surface modification of the silica sol more uniform, if it is carried out under acidic conditions and optionally slowly, thus often requiring control over the silica sol shelf life, i.e. gelation. The concept of a flexible $D_{OT}$ offers great freedom to control both these aspects. For prolonging the gelation time, the degree of overtitration as defined above may be increased in step (b) of the present method.

Generally, for $D_{OT}$ values, the amount of base needed to "back titrate" and thus trigger gelation is small by comparison with the amount of acid needed for neutralization, which also means that dilute base can be used to trigger gelation. The fact that a low base concentration can be used to trigger gelation also means that, e.g., the potential for local inhomogeneities during addition is smaller or, in other words, that there are fewer local concentration gradients, leading to a macroscopically better controllable gelation event.

In an embodiment, the method of the present invention consists of steps (a), (b), (d), (e), (f) and (g), of steps (a), (b), (d), (e), (f), (g) and (h), of steps (a), (b), (c), (d), (e), (f) and (g) or of steps (a), (b), (c), (d), (e), (f), (g) and (h).

The aqueous water glass solution of step (a) of the present method is optionally a commercial aqueous water glass solution which optionally comprises no additional solvents except for water, e.g. does not comprise any organic solvents such as, e.g., alcohols or $C_1$-$C_7$ alkanes. The molar ratio of $Na_2O$:$SiO_2$ in the water glass solution of step (a) optionally ranges between 2:1 and 1:5, optionally between 1:1 and 1:3 or optionally between 1:2 and 1:4.

The water glass solution of step (a) constitutes the aqueous phase and may optionally be sufficiently diluted to avoid excessive heat development during step (b) and to enable rapid and homogeneous neutralization throughout the bulk of the solution during step (b).

In an embodiment, the aqueous water glass solution of step (a) of the present method has or is diluted to a concentration of less than about 10 wt% silicon dioxide content, optionally less than about 8 wt%, optionally about 2 to 7, 2.5 to 6, 3 to 5 or about 4.5 wt%.

In another embodiment, the acid in step (b) and/or (f) of the present method is an organic or inorganic acid, optionally a strong acid, optionally an acid selected from the group consisting of hydrochloric acid, nitric acid, sulfuric acid, methanesulfonic acid, amidosulfonic acid, trichloroacetic acid, oxalic acid, citric acid, propionic acid, acetic acid and tartaric acid.

For example, the concentration(s) of the water glass solution of step (a) and/or the acid which is added in step (b) can be adjusted so that the solution reaches a temperature of about 40 to 80 °C, optionally about 50 to 80 °C, optionally about 60 to 70 °C during or after step (b). Optionally, the solution can be cooled during the addition of the acid in step (b). For example, the acid is added in step (b) in one batch to achieve the indicated pH and optionally quickly and/or continuously, for example in batch mode over a period of about 30 seconds to 5 minutes or optionally over a period of about 1 to 3 minutes, for example under stirring, or optionally carried out in a continuous flow system, e.g., in a static mixer fed by a water glass and neutralizing acid solutions.

In an embodiment, the temperature of the solutions and/or mixtures in any of steps (b) to (f), optionally (b) to (d), is in the range of about 40 to 80 °C, optionally about 50 to 80 °C, optionally about 60 to 70 °C.

All steps of the method of the present invention, in particular steps (d) and (f) are optionally carried out under stirring in order to achieve rapid mixing and/or emulsifying of reagents, high reaction speeds, and/or to avoid aggregation of particles. For example, stirring may include vigorous stirring, e.g. with high shear or turbulent flow-field stirring and, for example, a high-shear mixer can be used in any of the method steps.

Steps (b) and (c) of the present method can optionally be carried out simultaneously or consecutively. In case that the mono- or diorganofunctional silane used in step (c) liberates an acid during the reaction, steps (b) and (c) can optionally be carried out simultaneously.

The mono- or diorganofunctional silane of step (c) can be a silane, a siloxane or a mixture thereof. The term silane, as used herein, refers to a monomeric organofunctional (e.g. ethoxy-, methoxy- or chloro-) silane and the term siloxane refers to the corresponding oligomer obtained by controlled condensation of said monomers.

The mono- or diorganofunctional silane or siloxane of step (c) can be added in an alcohol-water solvent mixture, e.g. a mixture of water and a C1-C4 alcohol, optionally methanol, ethanol, butanol, n-propanol or isopropanol. Optionally, the mono-or diorganofunctional silane of step (c) can be (pre-)hydrolized in the alcohol-water solvent mixture previous to its use in step (c).

In an embodiment, the mixture of step (b) or (c) has or is diluted to a concentration of less than about 7%, optionally about 2.5 to 5.5, 3 to 5 or about 4.0 wt%, optionally by adding an acid and/or adding a monoorganofunctional silane, a diorganofunctional silane or a combination thereof, optionally in an alcohol-based mixture, e.g. an alcohol-water solvent mixture. The acid, alcohol, alcohol-water mixture and silane may be those defined herein, e.g. for steps (b) and (c). Also, the alcohol, alcohol-water mixture and/or silane may be those that are added in step (c) and, e.g. due to their addition, dilute the mixture to the concentrations defined above.

The term "covalently modifying" as used for optional step (c) of the present method means that the silicic acid is reacted with a chemical agent, optionally a monoorganofunctional silane or a diorganofunctional silane, to form a covalent bond between the silicic acid and the chemical agent, thereby altering the surface chemistry of the silicic acid sol particles and /or imparting new chemical functionality which may later on carry out a specific function in the materials (e.g. gluing, water resistance, mechanical strengthening, etc.). The monoorganofunctional or diorganofunctional silane for use in the method of the present invention may be any T- or D-type silane or an equivalent siloxane oligomer, wherein T and D refer to precursors having three and two oxygens or chloride atoms attached to the silicon atom and the residual valencies being taken up by organic functionalities, e.g. R and $R_1$, $R_2$ as described herein, grafted through an Si-C covalent bond, respectively. For example, T- and D-type silanes or siloxanes can be used for step (c). Alternatively, a mixture of T- and/or D-type silanes or siloxanes can be used which additionally comprises M-type silanes or siloxanes (M-type having one oxygen or chloride atom attached to the silicon atom in analogy to the definition provided above).

The mono- or diorganofunctional silane or siloxane may be one or more different mono- or diorganofunctional silanes or siloxanes.

In an embodiment, an agent for covalent modification, optionally the mono- or diorganofunctional silane in step (c) is added at a molar ratio of $Si_{Waterglass}/Si_{agent\ or\ mono-/diorganofunctional\ silane}$ in the range of 6:1 to 1000:1, optionally 10:1 to 300:1 or 30:1 to 200:1.

In another embodiment, the monoorganofunctional or a diorganofunctional silane in step (c) is a monomeric or oligomeric D-type or T-type silane selected from the group consisting of $R^1R^2SiX_2$ and $R\text{-}SiX_3$, wherein

- $R^1$ and $R^2$ are independently selected from the group consisting of methyl, vinyl and phenyl;
- R is selected from the group consisting of methyl, vinyl, propyl, phenyl and $-(CH_2)_nY$, wherein

    - n is 1, 2 or 3; and
    - Y is selected from the group consisting of amino, mercapto, methacrylate, acrylate, trifluoromethyl, chloro and glycidyl; and

- X is selected from the group consisting of chloro, methoxy and ethoxy;

optionally a silane selected from the group consisting of dimethyldimethoxysilane, dimethyldiethoxysilane, divinyldimethoxysilane, divinyldiethoxysilane, diphenyldimethoxysilane, diphenyldiethoxysilane, dimethyldichlorosilane, divinyldichlorosilane, diphenyldichlorosilane, methyltrimethoxysilane, methyltriethoxysilane, vinyltrimethoxysilane, vinyltriethoxysilane, propyltrimethoxysilane, propyltriethoxysilane, phenyltrimethoxysilane, phenyltriethoxysilane, aminotrimethoxysilane, aminotriethoxysilane, glycidoxy-propyltrimethoxysilane, glycidyoxy-propyltrimethoxysilane, glycidoxy-methyltrimethoxysilane, glycidoxy-methyltriethoxysilane, methyltrichlorosilane, vinyltrichlorosilane, propyltrichlorosilane, phenyltrichlorosilane, combinations thereof and optionally in monomer or oligomer form.

Depending on the choice of the organofunctional silane in step (c), the reaction of the silane with the aqueous silicate solution can additionally or alternatively to the acid used in step (b) contribute to the lowering of the pH to the range indicated in step (b) by liberating an acid (e.g. HCl) upon reaction with water.

In step (d), the organosilane-based hydrophobization agent may be added in quantities of a solvent, i.e. the agent is added as an organic solvent, e.g. relative to the aqueous phase being the other solvent. Additionally or alternatively, the organosilane-based hydrophobization agent may be mixed with another organic solvent and may be added as a mixture.

In an embodiment, the hydrophobization agent and/or organic solvent in step (d) measured by the initial silicic acid solution in step (b) is added to span a ratio of respective volume fractions of about 1:0.1 to 1:10, optionally about 1:0.5 to 1:2, optionally about 1:0.66 aqueous phase to hydophobization agent and/or organic solvent.

The indicated volume ratio of aqueous phase to hydophobization agent and/or organic solvent refers to the volume ratio of the aqueous phase to the sum of the hydrophobization agent and organic solvent, if both are present.

The organosilane-based hydrophobization agent of step (d) may be generally a hydrophobization agent that is activated by acid catalysis. For example, an organosilane-based hydrophobization agent for use in the present method can be a di- or polysiloxane, e.g. hexamethyldisiloxane (HMDSO), which is optionally activated by an acid to react with the surface of the silica particles to form a covalent Si-O bond.

For example, upon optional acid addition in step (f) the surface of the silica particles in the silica gel can be (further) modified, e.g. to increase its hydrophobicity, by reaction with the optionally acid-activated hydrophobization agent, e.g. a di- or polysiloxane. The change in surface chemical composition and the increase in hydrophobicity linked to this change is referred to as "to induce or carry out hydrophobization".

For example, the reaction of the hydrophobization agent, acid-activated or not, with the silica particles may occur in the pores of the silica particles, e.g. also in the silica gel of step (f), to increase hydrophobicity of the surface, thereby removing water from the pores of the silica particles and introducing the organic phase (e.g. the hydrophobization agent optionally containing at least one organic solvent) into the pores.

For example, the organosilane-based hydrophobization agent for use in the method of the present invention may be any M-type silane or siloxane as defined herein. Optionally, the organosilane-based hydrophobization agent may comprise at least 70%, 80% or 90% M-type silanes or siloxanes and the remaining percentages of the agent may be T- and/or D-type silanes or siloxanes.

In an embodiment, the hydrophobization agent in step (d) of the present method is a hydrophobization agent that can be activated by acid catalysis and/or is selected from the group consisting of hexamethyldisiloxane (HMDSO), hexamethyldisilazane (HMDZ), ethoxy-trimethylsilane, methoxy-trimethylsilane, ispropoxy-trimethylsilane, trimethylsilanol, trimethylchlorosilane (TMCS) and a mixture thereof.

In another embodiment, the organic solvent in step (d) of the present method is a non-polar organic solvent immiscible with water, optionally a solvent selected from the group consisting of linear or branched $C_5\text{-}C_{10}$ alkanes, optionally *n-, sec-, iso-, neo- tert-*$C_5\text{-}C_{10}$ alkanes, optionally n-hexane and n-heptane, $C_4\text{-}C_8$ aromatic or aliphatic carbo- and heterocycles, optionally a hexane or heptane or octane isomer mixture or toluene. The hexane, heptane or octane isomer mixture may be a commercially available product which comprises a mixture of isomers of hexane, heptane or octane.

The term "carbocycle" shall be understood to mean a substituted or non-substituted aliphatic hydrocarbon cycle containing the number of carbon items indicated, e.g. "$(C_{3-6})$carbocycle" or from 4 to 8, optionally 3 to 6, optionally 5 or 6 carbon atoms. These carbocycles may be either aromatic or non-aromatic systems. The non-aromatic ring systems may be mono- or polyunsaturated.

The term "heterocycle" refers to a stable substituted or non-substituted, aromatic or non-aromatic, optionally 4 to 8 membered, optionally 3 - 6 membered, optionally 5 or 6 membered, monocyclic, heteroatom-containing cycle. Each heterocycle consists of carbon atoms and one or more, optionally 1 to 4, optionally 1 to 3 heteroatoms optionally chosen from nitrogen, oxygen and sulphur. A heterocycle may contain the number of carbon atoms in addition to the non-carbon atoms as indicated: a "$(C_{4-8})$heterocycle" is meant to have 4 to 8 carbon atoms in addition to a given number of heteroatoms.

The residues amino, mercapto, methacrylate, acrylate, trifluoromethyl, chloro or glycidyl, as used herein, are optionally selected from $-NH_2$, $-SH$, $-O(C=O)C(CH_3)(CH_2)$, $-CF_3$, $-Cl$ and $-(oxiran-2yl-methoxy)$, respectively.

The terms non-polar organic solvent and water-immiscible are used herein as commonly understood in the field.

For example, in step (d) the liquid (sol phase) silica-water-particles are emulsified in the hydrophobization agent and/or the organic solvent as the organic phase and the mixture is stirred vigorously to achieve and maintain the emulsion of the silica-water-particles in the organic phase.

In step (e), for example, the addition of the base, optionally still under vigorous stirring, induces gelation (gel phase formation) within the silica-water-particles which are suspended/dispersed in the organic phase. For example, the gelation in small silica-water-particles which are individually dispersed in the organic phase increases the ion washing efficiency, i.e. the removal of ions (salts) from the silica gel compared to a method, wherein, e.g., the silica particles are gelled in an aqueous solvent alone without a consecutive washing step.

For example, the mixture is optionally stirred in step (e), e.g., for about 1 min to 10 hours, optionally for about 5 minutes to 2hours, optionally about 15 minutes to 1 hour for aging the gel.

In an embodiment, the base in step (e) of the present method is an inorganic or organic base, optionally selected from the group consisting of sodium hydroxide, potassium hydroxide, ammonia, ammonium fluoride, aliphatic and aromatic amines.

Transfer of the silica gel from the aqueous to the organic phase in step (f) may be achieved by stirring, e.g. vigorous stirring, alone. The organic phase of step (f) may be the organosilane-based hydrophobization agent of step (d), the organic solvent of step (d) or a combination thereof. Transferring the silica gel in step (f), optionally under stirring, may be, e.g., done for a period of about 10 min to 10 h, optionally for about 20 min to 5 h, optionally for about 30 min to 3 h. For example, the sodium ions can be efficiently left in the aqueous phase when the silica gel is transferred from the silica-water-particles into the organic phase.

In step (f), the silica gel may be completely, optionally essentially completely, transferred to the organic phase. Essentially completely, as used herein for the transfer in step (d) may, e.g., mean transfer of more than about 90% of the relative dry weight factions of aqueous and organic phase into the organic phase.

As outlined above, the organosilane-based hydrophobization agent may be activated by an acid. Optionally, an acid may be added in step (f) to further modify the surface of the silica particle surface in the silica gel, e.g. to increase the hydrophobicity, by reaction with the acid-activated di- or polysiloxane, to expel water and optionally ions dissolved therein from the pores of the silica gel and to transfer the silica gel into the organic phase.

Additionally or alternatively, a phase transfer catalyst may be added in step (f) to transfer the silica gel to the organic phase. The phase transfer catalyst may be any protic organic solvent that is amphiphilic.

In an embodiment, the phase transfer catalyst in step (f) of the present method is an amphiphilic compound, a surfactant or a protic organic solvent, optionally a low-molecular, e.g. a $C_1$-$C_4$ alcohol, optionally an alcohol selected from the group consisting of ethanol, n-propanol and isopropanol.

In step (g), the aqueous phase and the organic phase comprising the silica gel are separated by standard methods for phase separation, e.g. by decanting, centrifuging, by using a separatory funnel or industrially by draining a vessel, e.g. with constant monitoring of the efflux until a change in a measurable property (e.g. density or refractive index) is observed at which point the draining operation is stopped through an automated process control system. The organic phase comprising the silica gel is collected, and may optionally be washed, e.g. with water. The silica gel comprised in the organic phase of step (g) is referred to as (hydrophobic) silica gel, silica aerogel precursor or silica aerogel precursor material. The organic phase containing the suspended silica gel phase is also referred to as gel slurry or gel slurry phase.

The organic phase of step (g) may optionally be dried to obtain a silica aerogel powder. The silica aerogel powder is, for example, a hydrophobic silica aerogel powder.

In an embodiment, the silica gel is dried in step (h) of the present method by means of a dryer unit selected from a convective dryer, a contact dryer, a fluidized bed dryer, optionally at temperatures in the range of about 100 to 200 °C, optionally about 100 to 180 °C and at a pressure in the range of about 0.1 to 2 bar, optionally atmospheric pressure.

In another aspect, the present invention is directed to a method for preparing a silica aerogel blanket comprising the steps

(i) preparing a silica gel slurry

(ia) by a method comprising the steps of gelling an aqueous silicic acid or sodium silicate solution suspended in a water-immiscible non-polar organic solvent and transferring the silica gel into the organic solvent by means of a hydrophobization and phase transfer process to form a slurry;

(ib) by a method comprising the steps of gelling and optionally aging an alcohol-based silica sol precursor in an alcohol containing solvent mixture followed by hydrophobization of the silica gel phase, and optionally followed by a solvent exchange, to form a slurry; or

(ic) according to steps (a) to (g) of any of claims 1 to 12;

(ii) providing a support material having a top and bottom side, optionally a fiber-based or non-woven fleece material;

(iii) optionally positioning the bottom side of the support material on a first bottom barrier material, optionally a fleece, that is impermeable to the solid components of the silica gel slurry;

(iv) applying the silica gel slurry of step (i) to the support material, optionally by spraying, liquid slurry casting, coating or injection by a needle or a nozzle array;

(v) optionally covering the top side of the support material of step (iv) with a first top barrier material, optionally a fleece, that is impermeable to the solid components of the silica gel slurry; and

(vi) removing excess solvent form the silica gel slurry, optionally by compressing the support material or removing liquid by suction principle or a combination thereof, optionally until the volume fraction of silica gel particles in the silica gel slurry reaches at least about 80 to 90%, optionally about 90%.

The silica gel of step (i) is comprised in the organic phase used in the method described above or in a suitable prior art method for preparing a silica gel slurry in an organic solvent, e.g. in a method comprising the steps of gelling an aqueous silicic acid or sodium silicate solution suspended in a water-immiscible non-polar organic solvent and transferring the silica gel into the organic solvent by means of a hydrophobization and phase transfer process to form a slurry. The silica gel may be used in step (i) in the same organic phase. Alternatively, the organic phase may be exchanged with or into another solvent, optionally an organic solvent as defined for step (d) of the present method above. Suitable prior art methods for preparing a silica gel slurry in step (ia) are, for example, the methods described in US 2008/0081014 A1, US 2010/0233061 A1, US 2012/0225003 A1, US 2018/105429 A1 and/or WO 2008/143384 A1. Suitable prior art methods for preparing a silica gel slurry in step (ib) are, for example, the methods described in WO 2015/014813 A1, WO 2013/053951 A1, WO 2012/044052 A2, US 2011/0240907 A1 and/or FR 2873677 A1.

Should any of the above-cited prior art methods for steps (ia) or (ib) disclose drying the silica gel slurry after its preparation, this drying (step) is omitted when the method is performed in the context of present method steps (ia) and/or (ib).

For example, the methods (ia) and (ib) may, e.g., also involve vigorous stirring as described herein in order to prepare small particles which are well dispersed in the slurry.

The organic phase or solvent may also, for example, be diluted or concentrated before it is applied in step (iv). For example, the concentration of silica gel in the organic phase in steps (ii) and/or (iii) is in the range of about 1% to 10% by weight silica equivalent, expressed as $SiO_2$ formula weight equivalent, optionally in the range of about 2 to 7%, optionally about 2.5 to 6%.

The silica gel slurry of step (i) in the method described herein is not prepared by suspending a dried silica aerogel in a solvent, e.g. an organic solvent. Rather, the silica gel of step (i) is obtained in a sol-gel procedure as detailed above without having to go through an intermediate gel drying step.

The support material in step (ii) may be a fiber, a film, a sheet, a net, a textile, a porous body, a foam, a non-woven fabric or fleece or a material comprising combinations thereof.

In an embodiment, the support material in step (ii) is a fiber-based or foam-like material, optionally a highly macroporous material, made from polyamide, polybenzimidazole, polyaramide, acryl resin, phenolic resin, polyester, polyetheretherketone (PEEK), polyolefin, cellulose, carbon, cotton, wool, hemp, glass fiber, mineral fiber, ceramic fiber materials or a combination thereof, optionally in fiber blanket or non-woven form.

A highly microporous material, as used herein, is a material with at least 90% porosity.

The first bottom and/or top barrier material in steps (iii) and/or (v) may be any material that is impermeable to the solid components of the silica gel but, optionally, permeable to the organic phase or solvent. The barrier material may be a fleece, a thin-meshed glass fiber, a mineral fiber fleece, or a compressed nonwoven textile. Also, the first bottom and top barrier materials may be the same or different materials.

Steps (iii), (iv) and/or (v) may be executed in any order, e.g. subsequently (iii), (iv) and (v) or in one of the following orders: (iv), (iii) then (v) or (iii), (v) then (iv) or (v), (iii) then (iv) or (v), (iv) then (iii). In all these orders, either step (iii) or (v) may be omitted.

The volume fraction of silica gel particles in the slurry on and/or in the support material (of step (iv) of the method described herein) is measured by comparison of uncompressed and compressed slurry on and/or in the support material made by the same method at different degrees of compression, or by 3D tomographic analysis or other optical or microscopy techniques after removing substantially all of the solvent.

In an embodiment, the present invention is directed to a method for preparing a silica aerogel blanket as described above and further comprising one or more of the following steps

(vii) applying, optionally by dosing or spraying, a first binder or adhesive to the first barrier material covering the top and/or bottom side of the support material; and/or

(viii) structuring the support material, optionally with a felting needle array or a structuring needle array, optionally with fork or crown needles; and/or

(ix) mechanically joining fibers or fiber bundles of the support material which protrude from the support material, thus creating mechanical anchoring points; and/or

(x) covering the first top and/or bottom barrier material with a second top and/or bottom barrier material, optionally a fleece, that is impermeable to the solid components of the silica gel and optionally fixing, optionally gluing, the second top and/or bottom barrier material with fibers from the support material and the first top and/or bottom barrier material; and/or

(xi) applying, optionally by dosing or spraying, a second binder or adhesive to the second barrier material covering the first top and/or bottom barrier material; and/or

(xii) drying the silica gel blanket by means of a convective dryer or contact dryer or a combined convective-contact dryer and/or optionally assisted by radio frequency (RF) drying, optionally at temperatures in the range of about 100 to 200 °C, optionally about 130 to 180 °C and at a pressure in the range of about 0.1 to 2 bar, optionally atmospheric pressure.

The first and second binder or adhesive may be independently selected from the group consisting of, e.g., a polyvinyl acetate dispersion, a 1-component polyurethane glue, optionally an encapsulated or micro encapsulated 1-component polyurethane glue.

In step (viii), the structuring is performed, for example, to force individual fibers or fiber bundles from the support blanket to penetrate the fine mesh cover fleece on both sides which facilitates the mechanical joining of support blanket and cover fleece. For example, the binder or adhesive of steps (vii) and/or (xi) bonds the fibers or fiber bundles, which penetrate through the barrier material, to the surface of the barrier material. For example, and e.g. depending on the curing speed of the adhesive used, steps (vii) and (viii) can be performed in any sequence, i.e. either step (vii) before or after step (viii). Additionally or alternatively, the binder or adhesive of steps (vii) and/or (xi) can bond the first barrier material to a second barrier material.

The second barrier material may be the same as the first barrier material or a different barrier material as described above.

Mechanically joining fibers or fiber bundles can be done, e.g., by spraying a glue or adhesive material followed by a hot pressing step or by a continuous glue/adhesive dosing and pressing in a continuous roll-to-roll process.

Fixing, optionally gluing, the second barrier material with fibers from the support material and the first barrier material may be, e.g., done in the same way or in a single step together with the above described mechanical joining step for fibers and fiber bundles protruding from a blanket.

The following Figures and Examples serve to illustrate the invention and are not intended to limit the scope of the invention as described in the appended claims.

**Fig. 1** shows a graph correlating the time to gelation with the proton to silicon ratio, depending on the acid used. The rows labeled I, II and III correspond to the basic, neutralized and acidic forms of the silicate solution. For example, in the domain I, a substantial amount is needed for neutralization, governed by the buffering capacity which in turn is given by the sodium silicate solution concentration and the $Na_2O:SiO_2$ ratio of the water glass precursor. In the alkaline domain I, gelation is slow as shown by the very long gelation times of several single to tens of hours. Once the buffering capacity of the solution is almost depleted, the pH drops quickly into the neutral domain II, where gelation is fast, in the order of seconds to a few minutes. If domain II is passed rapidly by over-neutralizing with acid, a stable silicic acid sol is reached in domain III, where gelation times. For example, it is observed that over-titration can be done to a large extent, by far exceeding the molar amount of acid needed for neutralization and showing a difference in the slope of the observed gelation time vs. amount of acid added for overtitration (H+/Si molar ratio in domain III).

**Example 1: Preparation of a gel slurry according to claimed method of manufacturing**

Procedure: 23 ml of a sodium silicate solution (26.5% w/w $SiO_2$, $Na_2O{:}SiO_2$ molar ratio=1:3.1) was diluted to roughly 4.2% $SiO_2$ content by adding 120ml distilled water in a 2 L round bottom flask. Next, dilute 4 M nitric acid was added with vigorous stirring (500 rpm) and continuous pH monitoring, until the solution pH reached 2.0. This then yielded the neutralized silicic acid solution.

240 ml HMDSO was then added to the silicic acid solution, and the mixture was stirred and emulsified at 300 rpm at 70 °C in an oil bath. The gelation was initiated by a dropwise addition of 5.5 M ammonium hydroxide solution, and the whole solution/gel was stirred more intensively at 400 rpm for 10 min during the gelation step.

Next, the stirring speed was lowered to 300 rpm, and the mixture was kept stirring for 30 min, after which additional 4 M nitric acid was added until a pH value of 1.5 was recorded, followed by the addition of 100 ml isopropanol was added. The mixture was then stirred at 300 rpm for an additional 2.5 h at 70 °C oil bath temperature.

The reaction and stirring were then stopped and the phases allowed to separate for 5 minutes. The entire silica phase had transferred into the upper organic phase which was subsequently decanted.

The as obtained gel particle slurry was then dried at 150 °C for 30 min to retrieve the aerogel powder material. Material properties: Tap density 0.115 $g/cm^3$, $S_{BET}$ 780 $m^2/g$, Lambda 19-20 mW m$^{-1}$ K$^{-1}$

**Example 2: Alternative Preparation of a gel slurry according to claimed method of manufacturing**

A procedure identical to that of example 1 was used, with the exception that during the first step, the neutralized silicic acid preparation, 6 M hydrochloric acid was used for neutralization. The initial solution content was chosen to be 3.8% $SiO_2$ equivalent.

**Example 3: Alternative Preparation of a gel slurry according to claimed method of manufacturing**

A procedure identical to that of example 1 was used, with the exception that during the first step, the neutralized silicic acid preparation, 2.5 M sulfuric acid was used for neutralization and that a reaction temperature of 76 °C was used.

**Example 4: Alternative Preparation of a gel slurry according to claimed method of manufacturing**

A procedure identical to that of example 1 was used, with the exception that during the first step, the neutralized silicic acid preparation, 1.5 ml methyltrichlorosilane and an amount of 6 M hydrochloric acid were added to the water glass solution to reach a desired neutralization pH of the chemically modified silicic acid sol of 1.8.

**Example 5: Alternative Preparation of a gel slurry according to claimed method of manufacturing**

A procedure identical to that of example 1 was used, with the exception that during the first step, the neutralized silicic acid preparation, 2.7 ml dimethyldichlorosilane and an amount of 4.5 M nitric acid were added to the water glass solution to reach a desired neutralization pH of the chemically modified silicic acid sol of 2.3.

**Example 6: Alternative Preparation of a gel slurry according to claimed method of manufacturing**

A procedure identical to that of example 1 was used, with the exception that during the first step, the neutralized silicic acid preparation first an amount of 4.5 M nitric acid was added which was not sufficient for neutralization was added and a pH value of 10.3 was measured. The addition of the first aliquot of acid was followed immediately by the addition of a solution of divinyldichlorosilane and vinyltrichlorosilane present in a 1:3 molar ratio in ethanol, where the pH of the resulting silicic acid sol was 1.9.

**Example 7: Alternative Preparation of a gel slurry according to claimed method of manufacturing**

A procedure identical to that of example 1 was used, with the exception that during the first step, the neutralized silicic acid preparation, 1.8 ml trimethoxyvinylsilane and a mixture of nitric and hydrochloric acid were added to the water glass solution to reach a desired neutralization pH of the chemically modified silicic acid sol of 1.5.

**Example 8: Alternative Preparation of a gel slurry according to claimed method of manufacturing**

A procedure identical to that of example 1 was used, with the exception that during the second step, a mixture of 280 ml of HMDSO and 12.5 ml methyltriethoxysilane was added as a hydrophobe / solvent.

**Example 9: Alternative Preparation of a gel slurry according to claimed method of manufacturing**

A procedure identical to that of example 1 was used, with the exception that during the second step, a mixture of 125 ml of HMDSO and 150 ml of heptane (commercial isomer mixture) was added as a hydrophobe / solvent, and the pH for the hydrophobization in the third step was adjusted to 1.5 using trimethylchlorosilane (TMCS).

**Example 10: Alternative Preparation of a gel slurry according to claimed method of manufacturing**

A procedure identical to that of example 1 was used, with the exception that during the second step, a mixture of 120 ml of HMDS and 180 ml of hexane (commercial isomer mixture) was added as a hydrophobe / solvent, and the pH for the hydrophobization in the third step was adjusted to 1.5 using sulfuric acid.

**Example 11: Alternative Preparation of a gel slurry according to claimed method of manufacturing**

A procedure identical to that of example 1 was used, with the exception that during the second step, 220 ml of a hydrophobizig agent mixture of Hexamethyldisiloxane, trimethylethoxysilane and trimethylsilanol was added and the pH for the hydrophobization in the third step was adjusted to 1.5 using methanesulfonic acid.

**Example 12: Alternative Preparation of a gel slurry according to claimed method of manufacturing**

A procedure identical to that of example 1 was used, with the exception that during the first step, neutralization was effected using trifluoroacetic acid and a mixture of divinyldimethoxysilane (a) and propyltrimethoxysilane (b) in a silicon molar ratio (a):(b):(Si from water glass) = 0.02 : 0.01 : 0.988, all ingredients were added as an organofunctional silane mixture to reach a neutralized silicic acid pH value of 2.1. In the second step, 240 ml of HMDSO was added as hydrophobe and solvent, and the pH for the hydrophobization in the third step was adjusted to 1.7 using nitric acid.

**Example 17: Comparative example with direct neutralization**

Procedure: 23 ml of a sodium silicate solution (26.5% w/w $SiO_2$, $Na_2O$:$SiO_2$ molar ratio=1:3.1) was diluted to roughly 3.6% $SiO_2$ content by adding 147 ml distilled water in a 2 L round bottom flask.

250 ml HMDSO was added, and the mixture was stirred and emulsified at 300 rpm at 70°C in an oil bath. The gelation was initiated by a dropwise addition of 7.95ml 70% nitric acid, and the whole solution/gel was stirred more intensively at 400 rpm for 10 min during the gelation step.

Next, the stirring speed was lowered to 300 rpm, and the mixture was kept stirring for 30 min, after which 14 ml 4 M nitric acid and 100 ml isopropanol was added. The mixture was then stirred at 300 rpm for an additional 2.5 h at 70°C oil bath temperature.

The reaction and stirring were then stopped and the phases allowed to separate for 5 min. The entire silica phase had transferred into the upper organic phase which was subsequently decanted.

The as obtained gel particle slurry was then dried at 150°C for 30 min to retrieve the aerogel powder material. Material properties: Tap density 0.13 g/cm$^3$, $S_{BET}$ 593 m$^2$/g, Lambda 21-22 mW m$^{-1}$ K$^{-1}$

By direct comparison with example 1, the aerogel properties are comparable but slightly worse, as indicated by the higher tap density, lower surface area and higher thermal conductivity.

**Example 18: Industrial scale semi-continuous manufacturing of gel slurry**

An embodiment of the present invention is directed to the industrial semi-continuous manufacturing of a silica gel slurry comprising the steps of the method described herein.

A representative continuous setup to prepare a silica gel slurry according to an embodiment of the present invention consists of a tank farm for storage of precursors as well as fresh and recycled solvents of desired equilibrium compositions as well as a cascade of four stirred batch reactors (SBR) in continuous flow operation mode. The size of reactors 1 through 4 can be, e.g., 4m$^3$, 8m$^3$, 8m$^3$ and 8m$^3$ respectively. All SBR reactors can be vigorously stirred during standard operation to ensure good mixing and formation of small emulsion / gel droplet sizes. At the beginning of the operation, all reactors and systems can be clean and purged with nitrogen and then initialized as defined in the standard operations protocol.

For example, the silicic acid solution is prepared continuously by first diluting water glass (e.g. 28.0% w/w $SiO_2$, $Na_2O$:$SiO_2$ molar ratio=1:3.1), e.g. to a final concentration of 4.4 % $SiO_2$ with deionized water in a static mixer and then neutralizing and acidifying it with a stream of nitric acid (e.g. 3.3 M) in a second static mixer assembly. All flows can be controlled by means of precision-controlled Coriolis mass flow controllers (e.g. Endress & Hauser, ProMass F300). The pH value of the silicic acid sol effluent prepared in this way is less than 3, e.g. 2.4, and the flow rate of the reactant stream can be, e.g. 2325 l/h or 2190 kg/h.

The first reactor SBR 1 in the cascade is a then fed by this continuous stream of silicic acid precursor solution and a second stream of a hydrophobization agent (e.g. HMDSO, e.g. 2865 kg/h) and an emulsion is formed and maintained under stirring, e.g. very intense mechanical stirring. Both streams, silicic acid and hydrophobization agent (e.g. HMDSO) can be preheated to a desired temperature, e.g. of 66.5°C, e.g. by means of an array of plate type heat exchangers before entering the first reactor. Simultaneously, gel formation of the silicic acid / hydrophobization agent (e.g. HMDSO) emulsion is triggered inside SBR 1 by continuous dosing of a dilute base (e.g. ammonium hydroxide) solution at a rate of, e.g., 145 kg/h. The pH and medium temperature inside the reactor are above 4, e.g. at about 8.2, and, e.g., between 63°C and 65°C, respectively.

A continuous stream the gel slurry (e.g. of 5200 kg/h) is drawn from SBR 1 and fed into the second reactor SBR 2. The temperature in SBR 2 can be kept at, e.g., 69°C. The gel emulsion is continuously acidified to induce hydrophobization by a stream of dilute aqueous acid, e.g. hydrochloric acid, solution using a pH dosing control unit to maintain a pH value in the SBR2 tank of less than 3, e.g., 1.5 +/- 0.2. A phase transfer catalyst, e.g. a low molecular alcohol, e.g. ethanol, is dosed into the same vessel at a rate of, e.g., 165kg/h.

A third and fourth rector of the reactor group (SBR 3 and 4) are then used to increase the residence time for the hydrophobization treatment of the slurry and to allow essentially complete phase transfer of the gel particles into the organic phase. SBR3 is being fed by a continuous stream of approximately well mixed slurry, e.g. of 5500 kg/h of the slurry. The average filling level in SBR 3 can be kept constant, e.g. at approximately 5.5 to 6 m$^3$ volume, and while maintaining temperature and pH constant, e.g. at 67°C and 1.5, respectively. In the same way, the effluent from SBR 3 is then fed into SBR4 which is run in the same mode as SBR3 to increase residence time. For example, the combination of SBR3 & SBR 4 can add roughly 2 hours of residence time to the gel slurry during continuous operation, guaranteeing a uniform and sufficient hydrophobization treatment of the silica gel particles.

The efflux from SBR 4 is then phase separated, e.g. by using a continuous decanter setup or alternatively two reactors which are filled alternatively and used as settling vessels, from which the aqueous bottom phase is then drained and discarded and the upper organic phase - the gel slurry retained. The gel slurry can be washed, e.g. with distilled water twice and used further.

**Example 19: Alternative industrial scale semicontinuous manufacturing of gel slurry**

A process as described in Example 18, with the key difference that the preparation of the silicic acid precursor is carried out in a separate stirred batch reactor (SBR 0) placed as the first in the cascade upstream, where sodium silicate and an acid, e.g. sulfuric acid, as neutralizing acid are continuously dosed and where also a monoroganofunctional silane is being added, e.g. aminopropyltimethoxysilane (APTMS), e.g. at a rate of 5.5 kg/h and where pH and temperature are controlled, e.g. at 2.2 and 61°C.

**Example 20: Alternative industrial scale semicontinuous manufacturing of gel slurry**

A process as described in Example 18, with the key difference that the average temperature in all reactors, SBR1 through SBR 4, ranges from 73 to 78°C and that during the preparation of silicic acid using a mass flow controller setup with static mixers, said silicic acid stream is pre-modified by means of a monoorganofunctional silane, a diorganofunctional silane or a combination thereof, e.g. methyltrichlorosilane at a dosing rate of, e.g. 13.8 kg/h.

**Example 21: Alternative industrial scale semicontinuous manufacturing of gel slurry**

A process as described in Example 18, with the key difference that the second extension of the hydrophobization treatment normally done in SBR 4 in a continuous manner, the stream of SBR 3 is fed into two reaction / settling / washing / phase separation vessels SBR 4 and SBR 5 both operated in alternating batch mode and being filled / drained with a phase shift interval between them of approximately one hour. SBR 4 and 5 each can have a maximum volume capacity of, e.g. 8m$^3$. A representative, phase-shifted batch operation protocol for SBR 4, 5 can be as follows:

| Time: | SBR4 operation: | SBR 5 operation: |
|---|---|---|
| t = x | begin filling | SBR full, hydrophobization |
| t = x + 15 min | filling (from SBR3) | hydrophobization |
| t = x + 30 min | filling (from SBR3) | phase separation, washing |
| t = x + 45 min | filling (from SBR3) | wash, decant, drain SBR |
| t = x + 60 min | SBR full, hydropbobization | Begin filling |

(continued)

| Time: | SBR4 operation: | SBR 5 operation: |
|---|---|---|
| t = x + 75 min | hydrophobization | filling (from SBR3) |
| t = x + 90 min | hydrophobization | filling (from SBR3) |
| t = x + 105 min | hydrophobization | filling (from SBR 3) |
| t = x + 120 min | begin filling | SBR full, hydrophobization |

## Example 22: Industrial scale manufacturing of an aerogel powder material

A silica aerogel powder was produced from a silica gel slurry as prepared in example 18 and dried in a convective, fluidized bed dryer under nitrogen atmosphere at a temperature of 165°C. The contact / residence time of the individual gel particles during the drying operation was 35 minutes.

The resulting aerogel material had a tapping density of 75kg/m$^3$ and a packed bed thermal conductivity of 18.6 mW/(m K) and showed superhydrophobic behavior.

## Example 23: Industrial scale continuous manufacturing of aerogel blanket

In the following, a representative method for preparing a silica aerogel blanket according to the present method is described. A conveyer belt-type continuous roll-to-roll processing line for blanket assembly and drying which is directly fed from the organic gel slurry phase of the last reactor in the line of the reactor cascade (SBR 4 for examples 18 through 20, SBR 4 and 5 for example 21), performing the following operations from front to end:

In the front section of the conveyer belt line, a barrier material, e.g. fleece, feeding mechanism spools a first bottom barrier material, e.g. a "fine-mesh" barrier fleece, as well as a support material, e.g. a "wide mesh" nonwoven polyamide support fleece.

The gel slurry is fed onto the conveyor belt line in a precisely (filling level or height) metered fashion with a filling level or, e.g. 26.5 mm.

Later down the conveyor belt line, after the gel slurry layer has been formed and allowed to distribute evenly (e.g. through gravity action and mechanical rake-like distribution blades) with the gel slurry carpet being evenly distributed, a second barrier material, e.g. a fine mesh barrier fleece, is being placed atop.

In a subsequent narrowing slit or optionally a single or multi-roll compression mechanism, excess interstitial fluid is squeezed out from the gel particle infused blanket in such a way that the desired filling fraction of the gel blanket with gel constituents is achieved and the compressed gel bed height is reduced, e.g. to 14.7mm.

In a next step, again further down the line, the gel blanket is then structured, e.g. at regular intervals, e.g. defined by stitching patterns using, e.g. a felting needle array. Additionally or alternatively, the gel blanket can also be sewed together, e.g. in the same step, e.g. defined by stitching patterns using, e.g. sewing needles or a sewing needle array.

At the next processing station, the surface of both barrier materials, e.g. fine mesh barrier fleeces, are then sprayed with a binder or adhesive, e.g. a 1K PU adhesive solution which results in gluing the top and bottom barrier materials, e.g. fleece layers, to the support material, e.g. the nonwoven support fleece, and eventually a significant reduction of dust particle shedding in the final product.

In a final step, the gel blanket can be dried, e.g. at ambient pressure, e.g. in a drying tunnel using a combined convective / contact drying setup thereof and the solvent recuperated.

A resulting and exemplary dry aerogel blanket has a thickness of 12.5mm, an average density of 135 kg/m$^3$ and a thermal conductivity of 19.5 mW/(m K).

## Example 24: Alternative, industrial scale continuous manufacturing of aerogel blanket

A process identical to the one used in Example 23 was used to prepare an aerogel blanket, however instead of a nonwoven polyamide main support fleece, a wide mesh mineral fiber based blanket was used and the adhesive system used to glue the barrier fleece layers to the support fleece was a hybrid silica-organic colloidal adhesive system with reduced combustible load.

The resulting aerogel blanket had a density of 155kg/m$^3$ and a thermal conductivity of 18.8 mW/(m K).

**Claims**

1. A method for preparing a silica aerogel or aerogel precursor material comprising the steps of

   (a) providing an aqueous water glass solution;
   (b) forming silicic acid by adding an acid to the solution of (a) until a pH-value of about 3 to 1, optionally about 2.5 to 1 or 2 to 1 is reached;
   (c) optionally covalently modifying the silicic acid during or after step (b), optionally by adding a monoorganofunctional silane, a diorganofunctional silane or a combination thereof; optionally in an alcohol-water solvent mixture;
   (d) adding an organosilane-based hydrophobization agent and/or an organic solvent as an organic phase to the solution of (b) or (c);
   (e) adding a base to the mixture of (d) to induce silica gelation, optionally until the mixture is neutralized, optionally until a pH-value of about 4 to 10, optionally about 4 to 8 is reached;
   (f) transferring the silica gel from the aqueous to the organic phase to form a silica gel slurry in the organic phase, optionally by adding an acid and/or a phase transfer catalyst to induce hydrophobization of the silica gel;
   (g) separating and collecting the organic phase comprising the silica gel slurry; and
   (h) optionally drying the silica gel slurry to obtain a silica aerogel powder.

2. The method according to claim 1, wherein the aqueous water glass solution of step (a) has or is diluted to a concentration of less than about 10 wt% silicon dioxide content, optionally less than about 8 wt%, optionally about 2 to 7, 2.5 to 6, 3 to 5 or about 4.5 wt%.

3. The method according to claim 1 or 2, wherein the mixture of step (b) or (c) has or is diluted to a concentration of less than about 7%, optionally about 2.5 to 5.5, 3 to 5 or about 4.0 wt%, optionally by adding an acid and/or adding a monoorganofunctional silane, a diorganofunctional silane or a combination thereof, optionally in an alcohol-based solvent mixture.

4. The method according to any of claims 1 to 3, wherein the acid in step (b) and/or (f) is an organic or inorganic acid, optionally an acid selected from the group consisting of hydrochloric acid, nitric acid, sulfuric acid, methanesulfonic acid, amidosulfonic acid, trichloroacetic acid, oxalic acid, citric acid, propionic acid, acetic acid and tartaric acid.

5. The method according to any one of claims 1 to 4, wherein the mono- or diorganofunctional silane in step (c) is added at a molar ratio of $Si_{Waterglass}/Si_{mono-/diorganofunctional\ silane}$ in the range of 6:1 to 1000:1, optionally 10:1 to 300:1 or 30:1 to 200:1.

6. The method according to any one of claims 1 to 5, wherein the hydrophobization agent and/or the organic solvent in step (d) measured by the initial silicic acid solution in step (b) is added to span a ratio of respective volume fractions of about 1:0.1 to 1:10, optionally about 1:0.5 to 1:2, optionally about 1:0.66 aqueous phase to hydophobization agent and/or organic solvent.

7. The method according to any one of claims 1 to 6, wherein the monoorganofunctional or a diorganofunctional silane in step (c) is a monomeric or oligomeric D-type or T-type silane selected from the group consisting of $R^1R^2SiX_2$ and $R\text{-}SiX_3$, wherein

   - $R^1$ and $R^2$ are independently selected from the group consisting of methyl, vinyl and phenyl;
   - R is selected from the group consisting of methyl, vinyl, propyl, phenyl and $-(CH_2)_nY$, wherein

      - n is 1, 2 or 3; and
      - Y is selected from the group consisting of amino, mercapto, methacrylate, acrylate, trifluoromethyl, chloro and glycidyl; and

   - X is selected from the group consisting of chloro, methoxy and ethoxy;

   optionally a silane selected from the group consisting of dimethyldimethoxysilane, dimethyldiethoxysilane, divinyldimethoxysilane, divinyldiethoxysilane, diphenyldimethoxysilane, diphenyldiethoxysilane, dimethyldichlorosilane, divinyldichlorosilane, diphenyldichlorosilane, methyltrimethoxysilane, methyltriethoxysilane, vinyltrimethoxysilane, vinyltriethoxysilane, propyltrimethoxysilane, propyltriethoxysilane, phenyltrimethoxysilane, phenyltriethoxysilane, aminotrimethoxysilane, aminotriethoxysilane, glycidoxy-propyltrimethoxysilane, glycidyoxy-propyltrimethoxysilane, glycidoxy-methyltrimethoxysilane, glycidoxy-methyltriethoxysilane, methyltrichlorosilane, vinyltrichlorosilane, propyltrichlorosilane, phenyltrichlorosilane, combinations thereof and in monomer or oligomer form.

8. The method according to any one of claims 1 to 7, wherein

(i) the hydrophobization agent in step (d) is a hydrophobization agent that can be activated by acid catalysis and/or is selected from the group consisting of hexamethyldisiloxane (HMDSO), hexamethyldisilazane (HMDZ), ethoxy-trimethylsilane, methoxy-trimethylsilane, ispropoxy-trimethylsilane, trimethylsilanol, trimethylchlorosilane (TMCS) and a mixture thereof;
(ii) the organic solvent in step (d) is a non-polar organic solvent immiscible with water, optionally a solvent selected from the group consisting of linear or branched $C_5$-$C_{10}$ alkanes, optionally *n-, sec-, iso-, neo- tert*-$C_5$-$C_{10}$ alkanes, optionally n-hexane and *n*-heptane, $C_4$-$C_8$ aromatic or aliphatic carbo- and heterocycles, optionally a hexane or heptane or octane isomer mixture or toluene.

9. The method according to any of claims 1 to 8, wherein the base in step (e) is an inorganic or organic base, optionally selected from the group consisting of sodium hydroxide, potassium hydroxide, ammonia, ammonium fluoride, aliphatic and aromatic amines.

10. The method according to any of claims 1 to 9, wherein the phase transfer catalyst in step (f) is an amphiphilic compound, a surfactant or a protic organic solvent, optionally a low-molecular alcohol, optionally an alcohol selected from the group consisting of ethanol, n-propanol and isopropanol.

11. The method according to any of claims 1 to 10, wherein the temperature of the solutions and/or mixtures in any of steps (b) to (f), optionally (b) to (d), is in the range of about 40 to 80 °C, optionally about 50 to 80 °C, optionally about 60 to 70 °C.

12. The method according to any of claims 1 to 11, wherein the silica gel is dried in step (h) by means of a dryer unit selected from a convective dryer, a contact dryer, a fluidized bed dryer, optionally at temperatures in the range of about 100 to 200 °C, optionally about 100 to 180 °C and at a pressure in the range of about 0.1 to 2 bar, optionally atmospheric pressure.

13. A method for preparing a silica aerogel blanket comprising the steps

(i) preparing a silica gel slurry

(ia) by a method comprising the steps of gelling an aqueous silicic acid or sodium silicate solution suspended in a water-immiscible non-polar organic solvent and transferring the silica gel into the organic solvent by means of a hydrophobization and phase transfer process to form a slurry;
(ib) by a method comprising the steps of gelling and optionally aging an alcohol-based silica sol precursor in an alcohol containing solvent mixture followed by hydrophobization of the silica gel phase, and optionally followed by a solvent exchange, to form a slurry; or
(ic) according to steps (a) to (g) of any of claims 1 to 12;

(ii) providing a support material having a top and bottom side, optionally a fiber-based or non-woven fleece material;
(iii) optionally positioning the bottom side of the support material on a first bottom barrier material, optionally a fleece, that is impermeable to the solid components of the silica gel slurry;
(iv) applying the silica gel slurry of step (i) to the support material, optionally by spraying, liquid slurry casting, coating or injection by a needle or a nozzle array;
(v) optionally covering the top side of the support material of step (iv) with a first top barrier material, optionally a fleece, that is impermeable to the solid components of the silica gel slurry; and
(vi) removing excess solvent form the silica gel slurry, optionally by compressing the support material or removing liquid by suction principle or a combination thereof, optionally until the volume fraction of the silica gel particles in the silica gel slurry reaches at least about 80 to 90%, optionally about 90%.

**14.** The method according to claim 13 further comprising one or more of the following steps (vii)

applying, optionally by dosing or spraying, a first binder or adhesive to the first barrier material covering the top and/or bottom side of the support material; and/or

(viii) structuring the support material, optionally with a felting needle array or a structuring needle array, optionally with fork or crown needles; and/or

(ix) mechanically joining fibers or fiber bundles of the support material which protrude from the support material, thus creating mechanical anchoring points; and/or

(x) covering the first top and/or bottom barrier material with a second top and/or bottom barrier material, optionally a fleece, that is impermeable to the solid components of the silica gel and optionally fixing, optionally gluing, the second top and/or bottom barrier material with fibers from the support material and the first top and/or bottom barrier material; and/or

(xi) applying, optionally by dosing or spraying, a second binder or adhesive to the second barrier material covering the first top and/or bottom barrier material; and/or

(xii) drying the silica gel blanket by means of a convective dryer or contact dryer or a combined convective-contact dryer and/or optionally assisted by radio frequency (RF) drying, optionally at temperatures in the range of about 100 to 200 °C, optionally about 130 to 180 °C and at a pressure in the range of about 0.1 to 2 bar, optionally atmospheric pressure.

**15.** The method according to claim 13 or 14, wherein the support material is a highly macroporous fiber-based or foam-like material made from polyamide, polybenzimidazole, polyaramide, acryl resin, phenolic resin, polyester, polyetheretherketone (PEEK), polyolefin, cellulose, carbon, cotton, wool, hemp, glass fiber, mineral fiber, ceramic fiber materials or a combination thereof, optionally in fiber blanket or non-woven form.

Fig. 1

Europäisches
Patentamt

European
Patent Office

Office européen
des brevets

## EUROPEAN SEARCH REPORT

**Application Number**

EP 20 16 9693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/096949 A1 (EVANS OWEN RICHARD [US] ET AL) 7 April 2016 (2016-04-07) * example 10 * * paragraph [0121] - paragraph [0125] * ----- | 1-12 | INV. C01B33/158 B01J13/00 C01B33/159 C01B33/16 F16L59/02 |
| Y | WO 2015/151371 A1 (PANASONIC IP MAN CO LTD [JP]) 8 October 2015 (2015-10-08) * abstract * * examples 1,2 * ----- | 1-12 | |
| Y | EP 2 832 690 A1 (EMPA EIDGENÖSSISCHE MATERIALPRÜFUNGS UND FORSCHUNGSANSTALT [CH]) 4 February 2015 (2015-02-04) * abstract * * paragraph [0039] * ----- | 1-12 | |
| X | US 8 663 739 B2 (YEO JEONG-GU [KR]; AHN YOUNG-SOO [KR] ET AL.) 4 March 2014 (2014-03-04) * abstract * * example 1 * * column 1, line 34 * ----- | 13-15 | |

**TECHNICAL FIELDS
SEARCHED      (IPC)**

C01B
F16L
B01J

The present search report has been drawn up for all claims

| Place of search | Date of completion of the search | Examiner |
|---|---|---|
| The Hague | 6 October 2020 | Mertins, Frédéric |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

**EP 3 896 035 A1**

## ANNEX TO THE EUROPEAN SEARCH REPORT
## ON EUROPEAN PATENT APPLICATION NO.

EP 20 16 9693

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2020

| Patent document cited in search report | | Publication date | Patent family member(s) | | Publication date |
|---|---|---|---|---|---|
| US 2016096949 | A1 | 07-04-2016 | AU | 2015327930 A1 | 27-04-2017 |
| | | | AU | 2018214125 A1 | 30-08-2018 |
| | | | AU | 2019253873 A1 | 14-11-2019 |
| | | | BR | 112017006480 A2 | 19-12-2017 |
| | | | CA | 2961772 A1 | 07-04-2016 |
| | | | CA | 3041713 A1 | 07-04-2016 |
| | | | CL | 2017000797 A1 | 29-12-2017 |
| | | | CN | 106794996 A | 31-05-2017 |
| | | | EP | 3201133 A2 | 09-08-2017 |
| | | | JP | 6487542 B2 | 20-03-2019 |
| | | | JP | 2017533163 A | 09-11-2017 |
| | | | JP | 2019089707 A | 13-06-2019 |
| | | | KR | 20170063800 A | 08-06-2017 |
| | | | KR | 20190026987 A | 13-03-2019 |
| | | | KR | 20190027961 A | 15-03-2019 |
| | | | KR | 20190027962 A | 15-03-2019 |
| | | | KR | 20190027963 A | 15-03-2019 |
| | | | RU | 2668657 C1 | 02-10-2018 |
| | | | SG | 10202001165V A | 30-03-2020 |
| | | | SG | 11201702138X A | 27-04-2017 |
| | | | TW | 201638221 A | 01-11-2016 |
| | | | US | 2016096949 A1 | 07-04-2016 |
| | | | US | 2018094114 A1 | 05-04-2018 |
| | | | US | 2018112057 A1 | 26-04-2018 |
| | | | US | 2018112058 A1 | 26-04-2018 |
| | | | US | 2018134867 A1 | 17-05-2018 |
| | | | US | 2019203014 A1 | 04-07-2019 |
| | | | WO | 2016054524 A2 | 07-04-2016 |
| | | | ZA | 201702245 B | 30-01-2019 |
| | | | ZA | 201805867 B | 27-11-2019 |
| WO 2015151371 | A1 | 08-10-2015 | EP | 3127863 A1 | 08-02-2017 |
| | | | JP | 6195198 B2 | 13-09-2017 |
| | | | JP | 2015189661 A | 02-11-2015 |
| | | | US | 2017101321 A1 | 13-04-2017 |
| | | | WO | 2015151371 A1 | 08-10-2015 |
| EP 2832690 | A1 | 04-02-2015 | AU | 2014298538 A1 | 25-02-2016 |
| | | | BR | 112016002360 A2 | 01-08-2017 |
| | | | CN | 105555710 A | 04-05-2016 |
| | | | EP | 2832690 A1 | 04-02-2015 |
| | | | EP | 3027558 A1 | 08-06-2016 |
| | | | JP | 6449279 B2 | 09-01-2019 |
| | | | JP | 2016530199 A | 29-09-2016 |
| | | | KR | 20160054462 A | 16-05-2016 |
| | | | US | 2016258153 A1 | 08-09-2016 |

## ANNEX TO THE EUROPEAN SEARCH REPORT
## ON EUROPEAN PATENT APPLICATION NO.

EP 20 16 9693

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2020

| Patent document cited in search report | | Publication date | Patent family member(s) | | Publication date |
|---|---|---|---|---|---|
| | | | WO 2015014813 A1 | | 05-02-2015 |
| US 8663739 | B2 | 04-03-2014 | EP | 2440089 A2 | 18-04-2012 |
| | | | KR | 20100133268 A | 21-12-2010 |
| | | | US | 2012025127 A1 | 02-02-2012 |
| | | | WO | 2010143902 A2 | 16-12-2010 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120225003 A
- US 20180105429 A1
- US 5647962 A
- US 20080081014 A1
- US 20100233061 A1
- US 20120225003 A1
- US 2018105429 A1
- WO 2008143384 A1
- WO 2015014813 A1
- WO 2013053951 A1
- WO 2012044052 A2
- US 20110240907 A1
- FR 2873677 A1

**Non-patent literature cited in the description**

- **SCHWERTFEGER et al.** *J. Non-Cryst. Solids,* 1998, vol. 225, 24-29